# EUROPEAN PATENT SPECIFICATION

(11) **EP 2 969 330 B1**
(45) Date of publication and mention of the grant of the patent: **10.01.2018**
(21) Application number: 14769862.5
(22) Date of filing: 14.03.2014
(51) Int. Cl.: B23B 31/14, A01D 34/73

(54) **QUICK-COUPLING FOR MOWER BLADES**
SCHNELLKUPPLUNG FÜR MÄHERSCHAUFELN
RACCORD RAPIDE POUR DES LAMES DE FAUCHEUSE

(30) Priority: 14.03.2013 US 201361781842 P
(43) Date of publication of application: 20.01.2016
(73) Proprietor: Husqvarna AB, 56182 Huskvarna (SE)
(72) Inventor: JOHANSSON, Jörgen, 55339 Jönköping (SE); LENNINGS, Eric, 56138 Huskvarna (SE)
(74) Representative: Schröer, Gernot H.
(86) International application number: PCT/US2014/027570
(87) International publication number: WO 2014/152644

(56) References cited:
- GB-A- 1 249 112
- US-A- 3 467 404
- US-A- 3 573 876
- US-A- 3 573 876
- US-A- 3 837 661
- US-A- 4 709 512
- US-A- 4 709 512
- US-A- 5 820 135
- US-A- 5 820 135
- US-A1- 2003 182 917
- US-A1- 2003 182 917

## Description

### TECHNICAL FIELD

Example embodiments generally relate to outdoor power equipment and, more particularly, some embodiments relate to a lawn mower with a blade assembly that has blades that can be quickly removed and/or replaced.

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines, and are relatively inexpensive. Meanwhile, at the other end of the spectrum, riding lawn mowers, such as lawn tractors, can be quite large. Riding lawn mowers can sometimes also be configured with various functional accessories (e.g., trailers, tillers, and/or the like) in addition to grass cutting components. Riding lawn mowers provide the convenience of a riding vehicle as well as a typically larger cutting deck as compared to a walk-behind model.

The cutting blades of a lawn mower are an important, but sometimes overlooked, component of the lawn mower. The sharpness of the lawn mower blade impacts the quality of cut achieved using the corresponding blade. In this regard, for example, if a blade is not sharp, blades of grass may receive an uneven cut and the ends of the grass may tend to brown, leaving a less desirable appearance to the lawn and increasing susceptibility to some diseases. Meanwhile, using a sharp blade can achieve a cleaner cut that leaves a more appealing appearance to the cut lawn.

Blade sharpening or replacement requires removal of the blade from the lawn mower. Some lawn mower operators may be intimidated by the prospect of removing the blades either due to their perception of the complexity or difficulty of the task or due to their perception of the likelihood that tools that they do not possess may be required to complete the task.

In some cases, different styles of blades may be employed for cutting, mulching, or other lawn care tasks. An unwillingness or lack of desire to make blade changes can also cause lawn mower operators to fail to achieve the full potential of their lawn mowers.

The document US 2003/0182917 A1 discloses a blade coupler assembly operable to couple a cutting blade and a drive belt to a lawn mower engine crankshaft. The blade coupler assembly may include a blade/belt driver assembly having a tube portion with the first bore defined by a first diameter, wherein the first bore spans between a first longitudinal end and a second longitudinal end of the tube portion.

### BRIEF SUMMARY OF SOME EXAMPLES

Some example embodiments may provide a quick-change blade system that may allow users to make blade changes on a lawn mower relatively quickly and easily. In this regard, for example, some embodiments may provide for blade designs and corresponding mounting apparatuses that may enable operators to change blades without requiring the use of tools. Furthermore, some example embodiments may provide for a blade change system that can be operated with only one hand.

Some example embodiments may improve the ability of operators to change blades quickly and easily. Operators may therefore take fuller advantage of the capabilities of their lawn mowers, and have a greater satisfaction with the performance of their lawn mowers.

According to the invention, a lawn care device is provided. The device includes at least one blade, a rotatable shaft, and a blade coupler operably coupled to the rotatable shaft. The blade coupler includes a blade coupler base configured to rotate responsive to rotation of the rotatable shaft, a holding bolt configured to hold a blade proximate to the blade coupler base responsive to application of a clamping force thereon, and a centrifugal clamp assembly configured to increase the clamping force applied to the holding bolt responsive to an increase in speed of rotation of the rotatable shaft.

It will be appreciated that, although some embodiments of the invention are illustrated herein as providing a quick-change system for blades on a lawn mower (e.g., a riding lawn mower, a walk-behind lawn mower, or the like), the quick-change mounting apparatuses described herein may be used to similarly couple other devices together. For example, the mounting apparatuses described herein may be used to couple cutting elements to other types of lawn care equipment, such as trimmers, edgers, circular saws, chainsaws, and/or the like. The mounting apparatuses may also be used to couple rotary elements in devices other than lawn care equipment. For example, the mounting apparatuses described herein may be used to attach fan blades to a fan.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a side view of a riding lawn care vehicle according to an example embodiment;
FIG. IB illustrates a perspective view of the riding lawn care vehicle according to an example embodiment;
FIG. 2 illustrates a perspective view of a blade coupler according to an example embodiment;
FIG. 3 illustrates an exploded perspective view of the blade coupler according to an example embodiment;
FIG. 4, which includes FIGS. 4A and 4B, illustrates a cross section view of the blade coupler 100 taken through a center of the blade coupler along a line that is substantially perpendicular to the longitudinal length of a blade that may be attached via the blade coupler 100 according to an example embodiment; and
FIG. 5 illustrates a top view of a centrifugal clamp assembly according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability, or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. Additionally, the term "lawn care" is meant to relate to any yard maintenance activity and need not specifically apply to activities directly tied to grass, turf, or sod care. As used herein, operable coupling should be understood to relate to direct or indirect connection that, in either case, enables functional interconnection of components that are operably coupled to each other.

In an example embodiment, a lawn mower is provided with a quick-change blade system. The quick-change blade system may include a mounting apparatus that may take any of a plurality of different forms. Some example mounting apparatus designs are described herein. Although the mounting apparatuses may take different forms, each of the mounting apparatuses may generally provide operators with an ability to relatively easily remove and/or replace lawn mower blades using the mounting apparatus. In some cases, the removal and/or replacement may be performed without any tools and, in some cases, with the use of only one hand. Furthermore, some embodiments may even make it possible for an operator to easily disconnect or connect a blade without requiring, for example, jacking up of the lawn mower or removal of the deck since some embodiments may be easy and safe enough to use to allow an operator to reach under a deck and operate the mounting apparatus in a small amount of space or without a direct line of sight.

Some embodiments of the mounting apparatus may be sold as part of the lawn mower either permanently or removably attached to the spindle. However, in other instances, embodiments of the mounting apparatus may be sold separately from the lawn mower and configured to allow older model lawn mowers to be retrofitted with a mounting apparatus of an example embodiment.

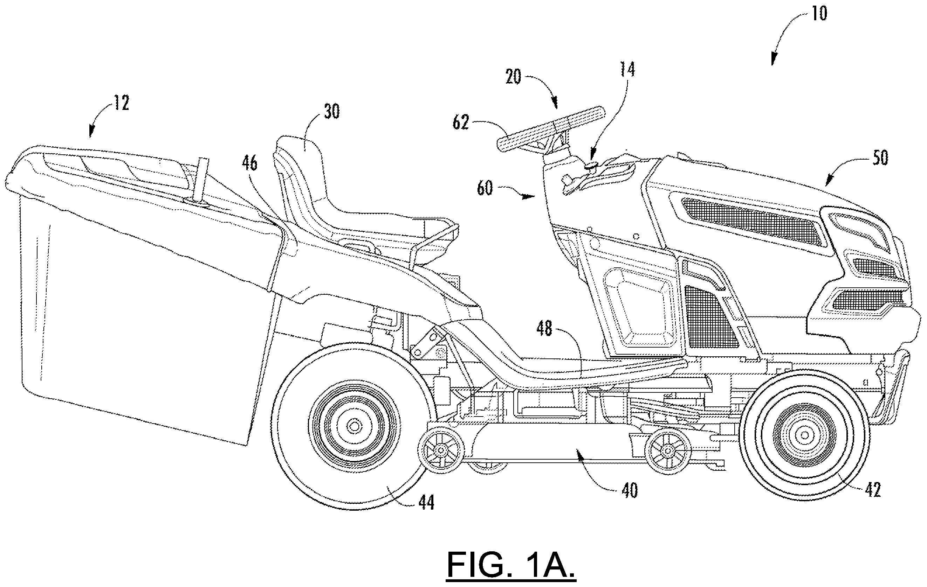

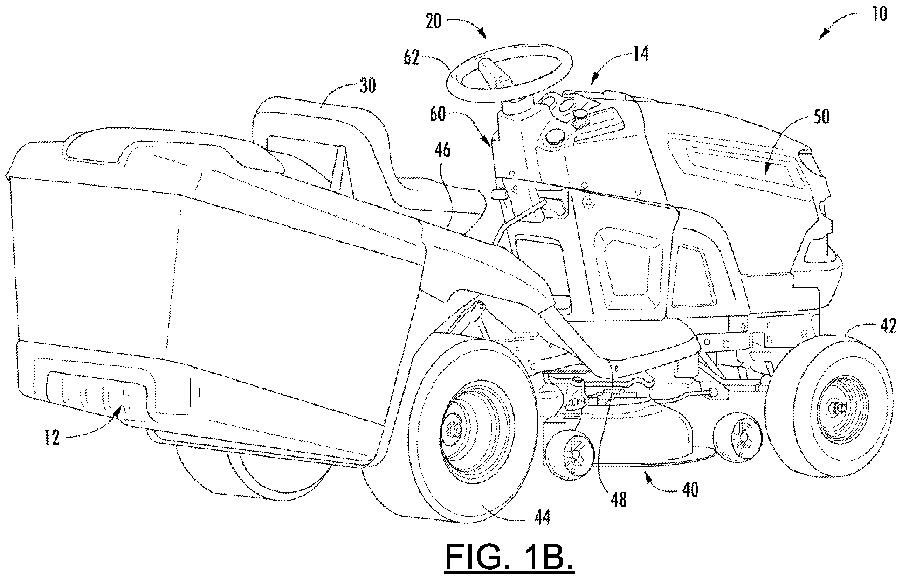

FIG. 1, which includes FIGS. 1A and IB, illustrates an example of a riding lawn care vehicle 10 having a bagging attachment 12. However, it should be appreciated that example embodiments may be employed on numerous other riding lawn care vehicles that may not include a bagging attachment 12. The riding lawn care vehicle 10 may also include an information panel 14 displaying operational information regarding the riding lawn care vehicle 10. As shown and described herein, the riding lawn care vehicle 10 may be a riding lawn mower (e.g., a lawn tractor, front-mount riding lawn mower, zero-turn riding lawn mower, cross mower, stand-on riding lawn mower, and/or the like). However, other example embodiments may be employed on other lawn mowers, such as robotic mowers, walk behind lawn mowers, remote-controlled lawn mowers, and/or the like.

FIG. 1A illustrates a side view of the riding lawn care vehicle 10 and FIG. IB illustrates a perspective view of the riding lawn care vehicle 10. The riding lawn care vehicle may include a steering assembly 20 (e.g., including a steering wheel, handle bars, or other steering apparatus) functionally connected to wheels of the riding lawn care vehicle 10 to which steering inputs are provided (e.g., the front and/or rear wheels in various different embodiments) to allow the operator to steer the riding lawn care vehicle 10. In some embodiments, the riding lawn care vehicle 10 may include a seat 30 that may be disposed at a center, rear, or front portion of the riding lawn care vehicle 10. The operator may sit on the seat 30, which may be disposed to the rear of the steering assembly 20, to provide input for steering of the riding lawn care vehicle 10 via the steering assembly 20.

The riding lawn care vehicle 10 may also include, or be configured to support attachment of, a cutting deck 40 having at least one cutting blade mounted therein. In some cases, a height of the at least one cutting blade may be adjustable by an operator of the riding lawn care vehicle 10. The cutting deck 40 may be a fixed or removable attachment in various different embodiments. Moreover, a location of the cutting deck 40 may vary in various alternative embodiments. For example, in some cases the cutting deck 40 may be positioned in front of the front wheels 42, behind the rear wheels 44, or in between the front and rear wheels 42 and 44 (as shown in FIG. 1) to enable the operator to cut grass using the at least one cutting blade when the at least one cutting blade is rotated below the cutting deck 40. In some embodiments, the cutting deck 40 may be lifted or rotated relative to the lawn mower frame to permit easier access to the underside of the lawn mower without requiring removal of the cutting deck 40. The cutting deck 40 may have one, two, three, or more cutting blades driven by one, two, three, or more rotatable shafts. The shafts may be rotated by any number of mechanisms. For example, in some embodiments, the shafts are coupled to a motor via a system of belts and pulleys. In other embodiments, the shafts may be coupled to the motor via a system of universal joints, gears, and/or other shafts. In still other embodiments, such as in an electric lawn mower, the shaft may extend directly from an electric motor positioned over the cutting deck.

In some embodiments, the front wheels 42 and/or the rear wheels 44 may have a shielding device positioned proximate thereto in order to prevent material picked up in the wheels from being ejected toward the operator. Fender 46 is an example of such a shielding device. When operating to cut grass, the grass clippings may be captured by a collection system (e.g., bagging attachment 12), mulched, or expelled from the cutting deck 40 via either a side discharge or a rear discharge.

The riding lawn care vehicle 10 may also include additional control related components such as one or more speed controllers, cutting height adjusters, and/or the like. Some of the controllers, such as the speed controllers, may be provided in the form of foot pedals that may sit proximate to a footrest 48 (which may include a portion on both sides of the riding lawn care vehicle 10) to enable the operator to rest his or her feet thereon while seated in the seat 20.

In the pictured example embodiment of FIG. 1, an engine 50 of the riding lawn care vehicle 10 is disposed substantially forward of a seated operator. However, in other example embodiments, the engine 50 could be in different positions such as below or behind the operator. In some embodiments, the engine 50 may be operably coupled to one or more of the wheels of the riding lawn care vehicle 10 in order to provide drive power for the riding lawn care vehicle 10. In some embodiments, the engine 50 may be capable of powering two wheels, while in others, the engine 50 may power all four wheels of the riding lawn care vehicle 10. Moreover, in some cases, the engine 50 may manually or automatically shift between powering either two wheels or all four wheels of the riding lawn care vehicle 10. The engine 50 may be housed within a cover that forms an engine compartment to protect engine 50 components and improve the aesthetic appeal of the riding lawn care vehicle 10.

In an example embodiment, the engine compartment may be positioned proximate to and/or mate with portions of a steering assembly housing 60. The steering assembly housing 60 may house components of the steering assembly 20 to protect such components and improve the aesthetic appeal of the riding lawn care vehicle 10. In some embodiments, a steering wheel 62 of the steering assembly 20 may extend from the steering assembly housing 60 and a steering column (not shown) may extend from the steering wheel 62 down through the steering assembly housing 60 to components that translate inputs at the steering wheel 62 to the wheels to which steering inputs are provided.

In some embodiments, the engine 50 may also provide power to turn the cutting blade or blades disposed within the cutting deck 40. In this regard, for example, the engine 50 may be used to turn a shaft upon which the cutting blade or blades may be fixed (e.g., via a belt and pulley system and/or other mechanisms). The turning of the shaft, at high speeds, may move the cutting blade or blades through a range of motion that creates air movement that tends to straighten grass for cutting by the moving blade and then eject the cut grass out of the cutting deck 40 (e.g., to the bagging attachment 12 or to the back or side of the riding lawn care vehicle 10), unless the blade and mower are configured for mulching.

The turning of the shaft at high speeds should also be appreciated to cause relatively high centrifugal forces to be generated. A typical lawnmower blade must be held onto the shaft with a screw having a relatively large amount of torque applied thereto. For example, some blade designs may require between 36Nm and 70Nm of torque to be applied for holding the blades. Working in these torque ranges can make it difficult for operators to remove blades, and can also make the application of the correct amount of torque difficult to accomplish after blade replacement. However, in some example embodiments, the large amount of centrifugal force can be used to apply holding torque or a clamping force on the blade. Moreover, according to an example design, the clamping force may increase as the speed of the rotation of the blade increases.

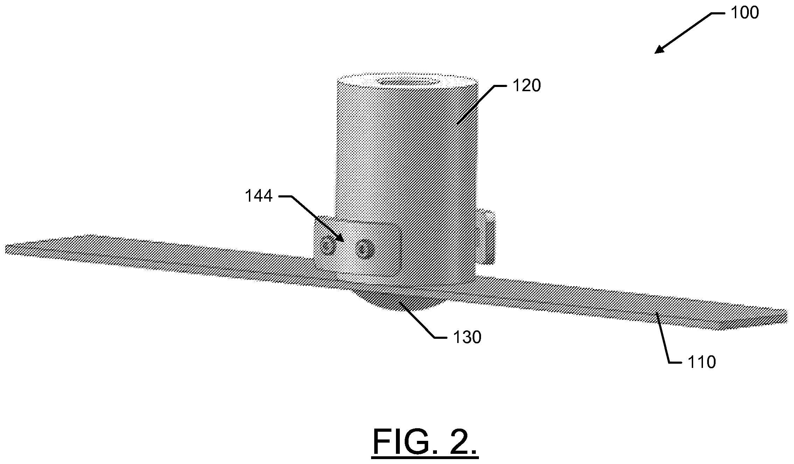

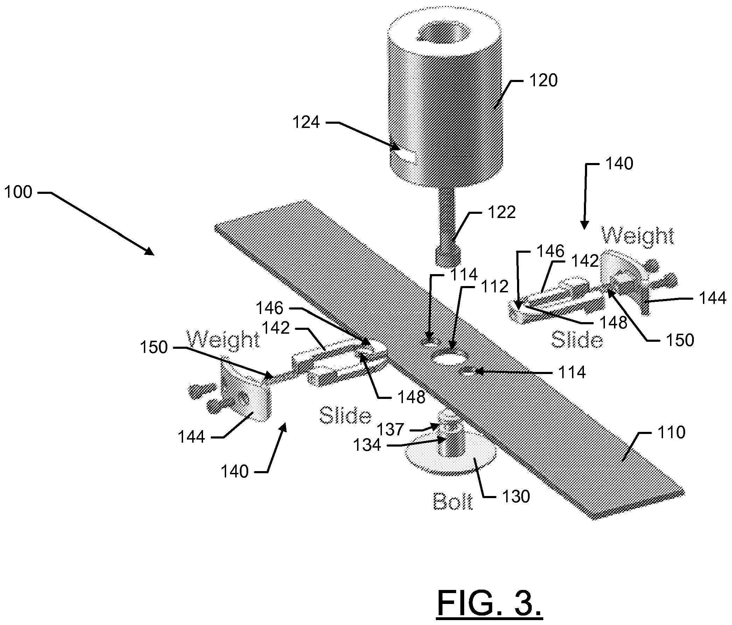

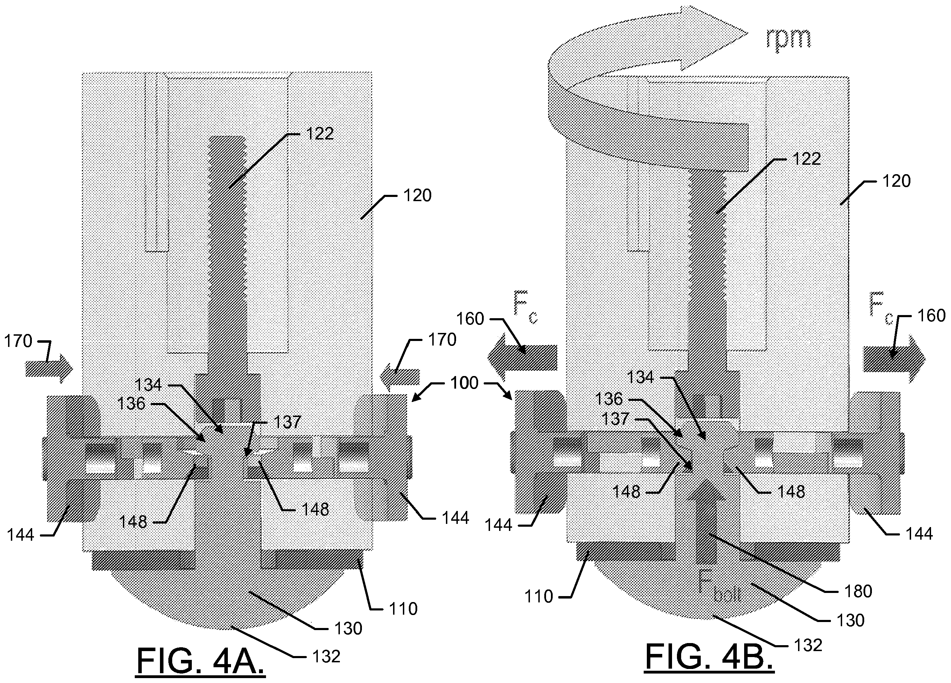

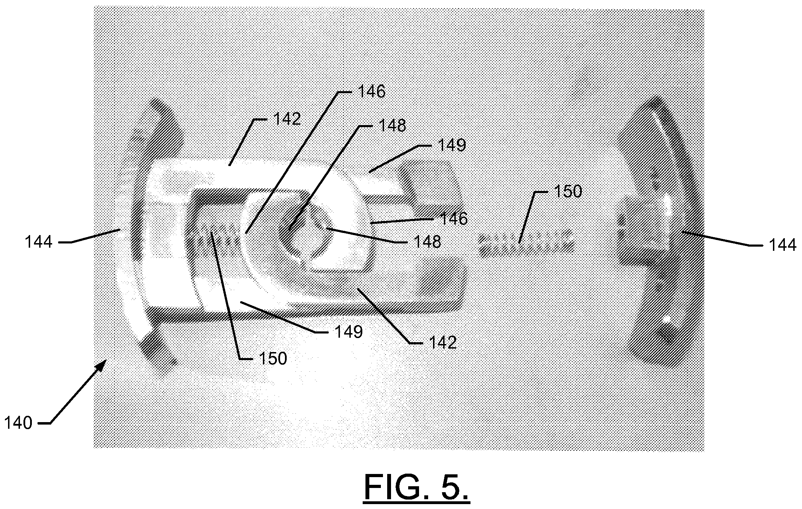

FIG. 2 illustrates a perspective view of a blade coupler 100 according to an example embodiment. FIG. 3 illustrates an exploded perspective view of the blade coupler 100. FIG. 4, which includes FIGS. 4A and 4B, illustrates a cross section view of the blade coupler 100 taken through a center of the blade coupler 100 along a line that is substantially perpendicular to the longitudinal length of a blade 110 that may be attached via the blade coupler 100. FIG. 5 illustrates a top view of a centrifugal clamp assembly according to an example embodiment.

Referring now to FIGS. 2-5, a shaft (often also referred to as a spindle) may extend downward into a center region of the cutting deck 40. The shaft may extend into, and operably couple with, a blade coupler base 120. The blade coupler base 120 may be a partially hollow cylinder that allows the shaft to extend therein along an axial center of the blade coupler base 120 (which may also form a longitudinal center of the blade coupler base 120). In some cases, a bolt 122 may be used to attach the blade coupler base 120 to the shaft. In this regard, for example, the bolt 122 may be passed through a distal end of the blade coupler base 120 to attach to the shaft, which may enter the blade coupler base 120 at a proximal end thereof.

In some embodiments, the blade 110 may be held proximate to and/or in contact with the blade coupler base 120. The blade 110 may include a receiving orifice 112 that may be positioned substantially at a center of the longitudinal and transverse centerlines of the blade 110. In some cases, the blade coupler base 120 may include protrusions that may extend away from the distal end thereof, substantially parallel with the longitudinal centerline of the blade coupler base 120, spaced apart from the axial center of the blade coupler base 120. The protrusions may be disposed on opposite sides of the axial center of the blade coupler base 120 and may be equidistant therefrom. The blade 110 may include alignment orifices 114 that may be disposed spaced apart from the receiving orifice 112 and along the longitudinal centerline of the blade 110 in order to receive the protrusions when the blade 110 is properly aligned for engagement with the blade coupler base 120.

In an example embodiment, a holding bolt 130 may pass through the receiving orifice 112 and into a center portion of the distal end of the blade coupler base 120. The holding bolt 130 may be selectively and variably clamped to the blade coupler base 120 to hold the blade 110 proximate to and/or in contact with the blade coupler base 120. The holding bolt 130 may include a head end 132 that may have a diameter that is wider than the diameter of the receiving orifice 112, and a coupling end 134 that may have a diameter that is less than the diameter of the receiving orifice 112, so that the coupling end 134 may be passed through the receiving orifice 112 to be passed into the distal end of the blade coupler base 120.

In some embodiments, a centrifugal clamp assembly 140 may pass through a portion of the blade coupler base 120 to engage the coupling end 134 of the holding bolt 130. In an example embodiment, the coupling end 134 may include an annular shaped holding ring 136 which may have a wider diameter than at least an adjacent portion of the coupling end 134 of the holding bolt 130. In some embodiments, the coupling end 134 may be formed of metal and may be a substantially uniform in diameter cylindrical extension from the head end 132. The holding ring 136 may be formed by machining a groove 137 around a portion of the coupling end 134. However, the holding bolt 130 could also be cast or formed by some other means in various other example embodiments.

Regardless of the particular structure of the holding bolt 130, and the holding ring 136 in particular, the centrifugal clamp assembly 140 may be configured to selectively and variably clamp the holding bolt 130 by providing a variable force to the coupling end 134 that is proportional to the speed of rotation (e.g., RPM) of the blade coupler base 120. In an example embodiment, the centrifugal clamp assembly 140 may be configured to include portions thereof that are insertable through radially extending holes 124 in sides of the blade coupler base 120 into the groove 137 formed between the holding ring 136 and the remainder of the holding bolt 130. In this regard, the portions of the centrifugal clamp assembly 140 may fit within the groove 137 and contact the holding ring 136 to prevent withdrawal of the holding bolt 130 from the blade coupler base 120.

In an example embodiment, the radially extending holes 124 in the sides of the blade coupler base 120 may be of sufficient size to receive clamp arms 142 that may extend substantially perpendicular to the longitudinal centerline of the blade coupler base 120 into the hollow interior of the blade coupler base 120. In some embodiments, the clamp arms 142 may be substantially C or U shaped members made of metal or another rigid material. Distal ends of the C or U shaped clamp arms 142 may be coupled to weights 144 that may be disposed proximate to peripheral sides of the blade coupler base 120 when the clamp arms 142 are fully inserted into the radially extending holes 124 in the sides of the blade coupler base 120.

In an example embodiment, an apex portion 146 of each of the clamp arms 142 may include a respective engagement surface 148 at an interior portion thereof. The engagement surface 148 may be curved to fit the shape of the groove 137 that lies proximate to the holding ring 136. When the centrifugal clamp assembly 140 is operated to clamp onto the holding bolt 130, the engagement surfaces 148 of the clamp arms 142 may be inserted substantially 360 degrees around the radial periphery of the coupling end 134 within the groove 137.

In an example embodiment, a biasing element 150 (e.g., a helical spring or the like) associated with each clamp arm 142 may be disposed between the weight 144 of one of the clamp arms 142 and the apex portion 146 of the other one of the clamp arms 142. The biasing element 150 may therefore tend to push the weights away from the blade coupler base 120 and away from the holding bolt 130. Given that the engagement surface 148 of each clamp arm 142 is configured to engage a portion of the groove 137 that is on an opposite side of the holding bolt 130 with respect to its corresponding weight 144, the biasing element 150 will tend to seat the engagement surface 148 in the groove 137. The combined effort of the biasing elements 150 on opposite sides of each other relative to the holding bolt 130 will therefore provide a clamping force around an entire circumference of the holding bolt 130 (e.g., at the groove 137 and the holding ring 136).

The clamping force provided by the biasing elements 150 may be a minimum clamping force. The effect of centrifugal forces on the weights 144 may be felt as the RPM of the shaft and the blade coupler base 120 increases. For example, as the RPM increases, the weights 144 will tend to experience centrifugal forces that increase the clamping force exerted by the engagement surface 148 onto the groove 137 and the holding ring 136 based on the fact that centrifugal force (Fc) is equal to mass (m) times radius (r) times RPM (ω) squared (Fc=mrco2). In this regard, as the RPM increases, the weights 144 will experience a force in the direction shown by the arrows 160 in FIG. 4B and therefore increase the clamping force exerted on the holding bolt 130.

In an example embodiment, the operator may push in on opposite sides of the weights 144 (as shown by the arrows 170 in FIG. 4 A) to overcome the minimum clamping force provided by the biasing elements 150 and remove the engagement surfaces 148 from the groove 137 so that the holding bolt 130 may be extracted from the blade coupler base 120 and the blade 110 may be removed. A new blade may then be installed and the holding bolt 130 may be inserted into the blade coupler base 120. In some embodiments, the end portion of the coupling end 134 of the holding bolt 130 may be tapered to facilitate insertion of the holding bolt 130 with sufficient force to spread the engagement surfaces 148 far enough apart to allow the holding ring 136 to pass over the engagement surfaces 148 and allow the engagement surfaces 148 to enter the groove 137. In such an example, the operator may push on the holding bolt 130 in the direction shown by the arrow 180 in FIG. 4B in order to spread the engagement surfaces 148 apart to install the holding bolt 130 into the blade coupler base 120. In some cases, a snapping sound may be provided by the biasing element 150 and/or other components when the engagement surfaces 148 are seated in the groove 137 with the minimum clamping force.

In some embodiments, the clamp arms 142 may include sliding surfaces 149 (or sliding faces) to enable them to slide over each other when moving to either increase or decrease the clamping forces on the holding bolt 130. In some embodiments, the clamp arms 142 may be configured to lie substantially within a same plane having a width dimension equal to the height of the radially extending holes 124 in the axial direction. The sliding surfaces 149 of each clamp arm 142 may be oriented in the same direction so that, for example, the sliding surfaces 149 of the clamp arms 142 of one half of the centrifugal clamp assembly 140 face upward and the sliding surfaces 149 of the clamp arms 142 of the other half of the centrifugal clamp assembly 140 face downward. Alternatively, as shown in the examples of FIGS. 3 to 5, one sliding surface 149 may face upward and the other sliding surface 149 may face downward for a clamp arm 142 of one half of the centrifugal clamp assembly 140, and the sliding surfaces 149 of the other half of the centrifugal clamp assembly 140 may be oriented oppositely in order to permit the surfaces to slide over each other. Further, in some embodiments (such as the one shown in FIG. 5), the clamp arms 142, when assembled, are positioned relative to each other such that one of the clamp arms 142 at least partially overlaps, links, interlocks, and/or interweaves with the other one of the clamp arms 142. In such embodiments, a first sliding surface 149 of a first clamp arm 142 may contact and/or be positioned above a corresponding first sliding surface 149 of the second clamp arm 142, and a second sliding surface 149 of the first clamp arm 142 may contact and/or be positioned below a corresponding second sliding surface 149 of the second clamp arm 142. For example, with reference to FIG. 5, the left clamp arm 142 has a top sliding surface 149 that faces downward (into the page) and a bottom sliding surface 149 that faces upward (out of the page), and the right clamp arm 142 has a top sliding surface 149 that faces upward (out of the page) and a bottom sliding surface 149 that faces downward (into the page). In this example, the top sliding surface 149 of the left clamp arm 142 contacts and/or is positioned above the corresponding top sliding surface 149 of the right clamp arm 142, and the bottom sliding surface 149 of the left clamp arm 142 contacts and/or is positioned below the corresponding bottom sliding surface 149 of the right clamp arm 142. Also, in some embodiments (such as the one shown in FIG. 5), the clamp arms 142, when assembled, are linked together such that one clamp arm 142 cannot be completely pulled apart from the other clamp arm 142 unless the one clamp arm 142 is first delinked from the other clamp arm 142.

Although some example embodiments have been described above in the context of employment within the cutting deck of a riding lawn mower, it should be appreciated that example embodiments may also be practiced in other contexts as well. For example, numerous other types of outdoor power equipment that employ blades could benefit from employment of quick-change blade technology as described herein. Thus, example embodiments may be practiced on either riding or walk behind lawn mower models as well as in connection with trimmers, edgers, circular saws, chain saw bars, agricultural equipment, and/or the like. Still other example embodiments may be practiced on other devices as well. For example, some embodiments of the quick-change mounting systems may be used to attach fan blades to a fan and/or other rotary elements to a rotating spindle.

Moreover, as indicated above, some models may be produced from the factory with quick-change fittings installed. However, other models may be retrofitted by installing a blade mount in a similar fashion to that which was previously used to install the blades themselves. Once the blade mount is in place, quick-change blades may be employed even by older models.

In some embodiments, a blade coupler for coupling a blade to a rotatable shaft may be provided. In some of these embodiments, the rotatable shaft may be positioned on a lawn care device. In any case, the blade coupler may include a blade coupler base configured to rotate responsive to rotation of the rotatable shaft, a holding bolt configured to hold the blade proximate to the blade coupler base responsive to application of a clamping force thereon, and a centrifugal clamp assembly configured to increase the clamping force applied to the holding bolt responsive to an increase in speed of rotation of the rotatable shaft.

The device of some embodiments may include additional features that may be optionally added either alone or in combination with each other. For example, in some embodiments, (1) the centrifugal clamp assembly may include clamp arms extending through a portion of the blade coupler base to apply the clamping force to a coupling end of the holding bolt. The coupling end of the holding bolt may pass through a receiving orifice in the blade and into the blade coupler base. In an example embodiment, (2) each one of the clamp arms may have a substantially C shape or U shape, an apex portion of which engages the holding bolt. In some cases, (3) the clamp arms may approach the holding bolt from opposite sides of the holding bolt. In some embodiments, (4) at least a portion of the clamp arms may overlap each other and slide over each other.

In some embodiments, any or all of (1) to (4) may be employed in addition to the optional modifications or augmentations described below. For example, in some embodiments, the clamp arms may include weights disposed at distal ends thereof, and the weights may be disposed proximate to peripheral edges of the blade coupler base. Alternatively or additionally, each one of the clamp arms may include a biasing element disposed to exert a force between the apex portion of one of the clamp arms and a corresponding weight of the other one of the clamp arms. Alternatively or additionally, the biasing elements may provide a minimum holding force on the coupling end. In such a case, application of force on the weights may overcome the minimum holding force to enable the coupling end of the holding bolt to be removed from the blade coupler base to enable an operator to remove the blade. Alternatively or additionally, each one of the clamp arms may include a sliding face that engages a corresponding sliding face of the other one of the clamp arms. Additionally or alternatively, the sliding faces of the one of the clamp arms may face the same direction and the sliding faces of the clamp arms of the other one of the clamp arms may face in an opposite direction. Additionally or alternatively, one sliding face of the one of the clamp arms faces a first direction and another sliding face of the one of the clamp arms faces a second direction that is opposite the first direction. It should also be appreciated that although FIG. 1 illustrates a riding lawn care device, the device on which example embodiments are practiced may be a ride on lawn care device or a walk behind lawn care device.

## Claims

1. A lawn care device comprising a blade coupler (100) for coupling a blade to a rotatable shaft of the lawn care device, the blade coupler (100) comprising:
a blade coupler base (120) configured to rotate responsive to rotation of the rotatable shaft; **characterized by**
a holding bolt (130) configured to hold the blade proximate to the blade coupler base (120) responsive to application of a clamping force thereon; and
a centrifugal clamp assembly (140) configured to increase the clamping force applied to the holding bolt (130) responsive to an increase in speed of rotation of the rotatable shaft.

2. The lawn care device of claim 1, wherein the centrifugal clamp assembly (140) comprises clamp arms (142) extending through a portion of the blade coupler base (120) to apply the clamping force to a coupling end (134) of the holding bolt (130), the coupling end (134) of the holding bolt (130) passing through a receiving orifice (112) in the blade and into the blade coupler base (120).

3. The lawn care device of claim 2, wherein each one of the clamp arms (142) comprises a substantially C shape or U shape, an apex portion (140) of which engages the holding bolt (130).

4. The lawn care device of claim 3, wherein the clamp arms (142) approach the holding bolt (130) from opposite sides of the holding bolt (130).

5. The lawn care device of claim 4, wherein at least a portion of the clamp arms (142) overlap each other and slide over each other.

6. The lawn care device of claim 2, wherein the clamp arms (142) comprise weights (144) disposed at distal ends thereof, the weights (144) being disposed proximate to peripheral edges of the blade coupler base (120).

7. The lawn care device of claim 6, wherein each one of the clamp arms (142) comprises a biasing element (150) disposed to exert a force between the apex portion (140) of one of the clamp arms (142) and a corresponding weight (144) of the other one of the clamp arms (142).

8. The lawn care device of claim 7, wherein the biasing elements (150) provide a minimum holding force on the coupling end (134), and wherein application of force on the weights (144) to overcome the minimum holding force enables the coupling end (134) of the holding bolt (130) to be removed from the blade coupler base (120) to enable an operator to remove the blade.

9. The lawn care device of claim 2, wherein each one of the clamp arms (142) comprises a sliding face (149) that engages a corresponding sliding face (149) of the other one of the clamp arms (142).

10. The lawn care device of claim 9, wherein each one of the clamp arms (142) comprises at least two sliding faces (149) and wherein the sliding faces (149) of the one of the clamp arms (142) face the same direction, and the sliding faces (149) of the clamp arms (142) of the other one of the clamp arms (142) face in an opposite direction.

11. The lawn care device of claim 9, wherein one sliding face (149) of the one of the clamp arms (142) faces a first direction, and another sliding face (149) of the one of the clamp arms (142) faces a second direction that is opposite the first direction.

12. The lawn care device of any of claims 1-11, wherein the rotatable shaft is positioned on a ride on lawn care device or a walk behind lawn care device.

13. The lawn care device of any of the preceding claims, wherein the device is a ride on lawn care device or a walk behind lawn care device.

## Patentansprüche

1. Rasenpflegevorrichtung umfassend eine Messerkupplung (100) zum Ankuppeln eines Messers an einer drehbaren Welle der Rasenpflegevorrichtung, wobei die Messerkupplung (100) umfasst:
einen Messerkupplungssockel (120) ausgelegt zum Drehen in Reaktion auf die Rotation der drehbaren Welle; **gekennzeichnet durch**:
einen Haltebolzen (130) ausgelegt zum Halten des Messers in der Nähe des Messerkupplungssockels (120) in Reaktion auf das Anlegen einer Klemmkraft; und
eine zentrifugale Klemmanordnung (140) ausgelegt zum Erhöhen der an den Haltebolzen (130) angelegten Klemmkraft in Reaktion auf eine Erhöhung der Drehzahl der drehbaren Welle.

2. Rasenpflegevorrichtung nach Anspruch 1, wobei die zentrifugale Klemmanordnung (140) Klemmarme (142) umfasst, die sich durch einen Teilabschnitt des Messerkupplungssockels (120) erstrecken, um die Klemmkraft an ein Kupplungsende (134) des Haltebolzens (130) anzulegen, wobei das Kupplungsende (134) des Haltebolzens (130) durch eine Aufnahmeöffnung (112) im Messer und in den Messerkupplungssockel (120) hinein verläuft.

3. Rasenpflegevorrichtung nach Anspruch 2, wobei jeder der Klemmarme (142) eine im Wesentlichen C förmige oder U-förmige Gestalt aufweist, deren Scheitelabschnitt (140) den Haltebolzen (130) aufnimmt.

4. Rasenpflegevorrichtung nach Anspruch 3, wobei die Klemmarme (142) sich von entgegengesetzten Seiten des Haltebolzens (130) aus am Haltebolzen (130) anstellen.

5. Rasenpflegevorrichtung nach Anspruch 4, wobei die Klemmarme (142) in mindestens einem Teilabschnitt einander überlappen und übereinander gleiten.

6. Rasenpflegevorrichtung nach Anspruch 2, wobei die Klemmarme (142) Gewichte (144) umfassen, die an ihren fernen Enden angeordnet sind, wobei die Gewichte (144) in der Nähe von Umfangsrändern des Messerkupplungssockels (120) angeordnet sind.

7. Rasenpflegevorrichtung nach Anspruch 6, wobei jeder der Klemmarme (142) ein Vorspannelement (150) umfasst, das so angeordnet ist, dass es zwischen dem Scheitelabschnitt (140) des einen der Klemmarme (142) und einem entsprechenden Gewicht (144) des anderen der Klemmarme (142) eine Kraft ausübt.

8. Rasenpflegevorrichtung nach Anspruch 7, wobei die Vorspannelemente (150) eine Mindesthaltekraft am Kupplungsende (134) bereitstellen und wobei das Anlegen einer Kraft an die Gewichte (144) zum Überwinden der Mindesthaltekraft es ermöglicht, dass das Kupplungsende (134) des Haltebolzens (130) aus dem Messerkupplungssockel (120) entfernt wird, damit ein Bediener das Messer ausbauen kann.

9. Rasenpflegevorrichtung nach Anspruch 2, wobei jeder der Klemmarme (142) eine Gleitfläche (149) umfasst, die an einer entsprechenden Gleitfläche (149) des jeweils anderen Klemmarms (142) angreift.

10. Rasenpflegevorrichtung nach Anspruch 9, wobei jeder der Klemmarme (142) mindestens zwei Gleitflächen (149) umfasst und wobei die Gleitflächen (149) des jeweils einen der Klemmarme (142) in die gleiche Richtung weisen und die Gleitflächen (149) der Klemmarme (142) des jeweils anderen der Klemmarme (142) in eine entgegengesetzte Richtung weisen.

11. Rasenpflegevorrichtung nach Anspruch 9, wobei eine Gleitfläche (149) des jeweils einen der Klemmarme (142) in eine erste Richtung weist und eine andere Gleitfläche (149) des jeweils einen der Klemmarme (142) in eine zweite Richtung weist, die der ersten Richtung entgegengesetzt ist.

12. Rasenpflegevorrichtung nach Anspruch 1 bis 11, wobei die drehbare Welle an einer fahrbaren Rasenpflegevorrichtung oder an einer geschobenen Rasenpflegevorrichtung positioniert ist.

13. Rasenpflegevorrichtung nach einem der vorhergehenden Ansprüche, wobei die Vorrichtung eine fahrbare Rasenpflegevorrichtung oder eine geschobene Rasenpflegevorrichtung ist.

## Revendications

1. Dispositif d'entretien de pelouses comportant un coupleur (100) de lame pour accoupler une lame à un arbre rotatif du dispositif d'entretien de pelouses, le coupleur (100) de lame comprenant :
une base (120) du coupleur de lame configurée pour tourner en réaction à la rotation de l'arbre rotatif,
**caractérisé par** un boulon de montage (130) configuré pour maintenir la lame à proximité de la base (120) du coupleur de lame en réaction à l'application à celui-là d'une force de serrage ; et
un ensemble pince (140) centrifuge configuré pour augmenter la force de serrage appliquée au boulon de montage (130) en réaction à une augmentation de la vitesse de rotation de l'arbre rotatif.

2. Dispositif d'entretien de pelouses selon la revendication 1, dans lequel l'ensemble pince (140) centrifuge comprend des bras (142) de pince traversant une partie de la base (120) du coupleur de lame pour appliquer une force de serrage à une extrémité d'accouplement (134) du boulon de montage (130), l'extrémité d'accouplement (134) du boulon de montage (130) traversant un orifice de réception (112) dans la lame et dans la base (120) du coupleur de lame.

3. Dispositif d'entretien de pelouses selon la revendication 2, dans lequel chacun des bras (142) de pince présente une forme sensiblement en C ou en U, dont la partie sommitale (140) entre en prise avec le boulon de montage (130).

4. Dispositif d'entretien de pelouses selon la revendication 3, dans lequel les bras (142) de pince approchent le boulon de montage (130) depuis des côtés opposés de celui-ci.

5. Dispositif d'entretien de pelouses selon la revendication 4, dans lequel au moins une partie d'un bras (142) de pince chevauche une partie de l'autre bras et elles coulissent l'une sur l'autre.

6. Dispositif d'entretien de pelouses selon la revendication 2, dans lequel les bras (142) de pince comprennent des poids (144) disposés à leur extrémité distale, les poids (144) étant disposés à proximité des bords périphériques de la base (120) du coupleur de lame.

7. Dispositif d'entretien de pelouses selon la revendication 6, dans lequel chacun des bras (142) de pince comprend un élément de sollicitation (150) disposé pour exercer une force entre la partie sommitale (140) de l'un des bras (142) de pince et le poids (144) correspondant de l'autre des bras (142) de pince.

8. Dispositif d'entretien de pelouses selon la revendication 7, dans lequel les éléments de sollicitation (150) assurent une force minimale de maintien sur l'extrémité d'accouplement (134), et dans lequel l'application d'une force sur les poids (144) pour surmonter la force minimale de maintien permet de retirer de la base (120) du coupleur de lame l'extrémité d'accouplement (134) du boulon de montage (130) pour permettre à un opérateur de déposer la lame.

9. Dispositif d'entretien de pelouses selon la revendication 2, dans lequel chacun des bras (142) de pince comprend une face de coulissement (149) qui s'applique sur la face de coulissement (149) correspondante de l'autre des bras (142) de pince.

10. Dispositif d'entretien de pelouses selon la revendication 9, dans lequel chacun des bras (142) de pince comprend au moins deux faces de coulissement (149) et dans lequel les faces de coulissement (149) de l'un des bras (142) de pince sont tournées dans la même direction et les faces de coulissement (149) des bras (142) de pince de l'autre des bras (142) de pince sont tournées dans la direction opposée.

11. Dispositif d'entretien de pelouses selon la revendication 9, dans lequel une face de coulissement (149) de l'un des bras (142) de pince est tournée dans une première direction et l'autre face de coulissement (149) du même bras (142) de pince est tournée dans une seconde direction qui est opposée à la première direction.

12. Dispositif d'entretien de pelouses selon l'une quelconque des revendications 1 à 11, dans lequel l'arbre rotatif est placé sur un dispositif d'entretien de pelouses à conducteur porté ou un dispositif d'entretien de pelouses poussé.

13. Dispositif d'entretien de pelouses selon l'une quelconque des revendications précédentes, dans lequel le dispositif est un dispositif d'entretien de pelouses à conducteur porté ou un dispositif d'entretien de pelouses poussé.
